**Europäisches Patentamt**

**European Patent Office**

**Office européen des brevets**

(11) Veröffentlichungsnummer: **0 254 863**
**A2**

(12) # EUROPÄISCHE PATENTANMELDUNG

(21) Anmeldenummer: **87108904.1**

(22) Anmeldetag: **22.06.87**

(51) Int. Cl.4: **G01N 21/27** , G01N 21/47

(30) Priorität: **18.07.86 DE 3624380**
**05.08.86 DE 3626524**

(43) Veröffentlichungstag der Anmeldung:
**03.02.88 Patentblatt 88/05**

(84) Benannte Vertragsstaaten:
**BE CH DE ES FR GB IT LI NL SE**

(71) Anmelder: **Erwin Sick GmbH Optik-Elektronik**
**Sebastian-Kneipp-Strasse 1**
**D-7808 Waldkirch(DE)**

(72) Erfinder: **Fetzer, Günter, Dipl.-Ing.**
**Sonnhalde 97a**
**D-7803 Gundelfingen(DE)**
Erfinder: **Semtana, Klaus, Dipl.-Ing.**
**Neudorfstrasse 15**
**D-7831 Windenreute(DE)**

(74) Vertreter: **Dipl.-Phys.Dr. Manitz Dipl.-Ing.,**
**Dipl.-Wirtsch. Finsterwald Dipl.-Chem.Dr.**
**Heyn Dipl.-Phys. Rotermund Morgan,**
**B.Sc.(Phys.)**
**Robert-Koch-Strasse 1**
**D-8000 München 22(DE)**

(54) **Optisches Autokollimations-Messgerät.**

(57) Ein optisches Autokollimations-Meßgerät weist einen in einem Gehäuse (15) angeordneten Lichtsender-Empfänger auf. Mit einem Kondensor (9) wird die Lichtquelle (11) durch den Stahlenteiler (20) in das Objektiv (12) abgebildet. Dieses wiederum bildet die Austrittspupille des Kondensors (9) über die Meßstrecke (13) in die Ebene des Retroreflektors ab. Der Retroreflektor (14) reflektiert das auftreffende Lichtbündel im wesentlichen in sich selbst zum Gehäuse (15) des Lichtsender Empfängers zurück, wo das Empfangsbündel vom Strahlteiler (20) zu einem Photoempfänger (21) gelenkt wird. Zwischen dem Frontobjektiv (12) und der Meßstrecke (13) befindet sich ein Umlenkspiegel (16), der aus zwei Teilen besteht, die um eine senkrecht auf der optischen Achse (17) stehende Schwenkachse (25) aus einer gestreckten in eine um 90° zueinander versetzte Position klappbar sind. Durch eine geeignete Blende wird verhindert, daß die Stoßkanten der beiden Teile des Umlenkspiegels vom Sendelichtbündel getroffen werden.

FIG. 2

## Optisches Autokollimations-Meßgerät

Die Erfindung betrifft ein optisches Autokollimations-Meßgerät mit einem in einem Gehäuse angeordneten Lichtsender-Empfänger mit einer Lichtquelle, welche über einen Strahlteiler und eine Optik ein Lichtbündel über eine Meßstrecke zu einem Retroreflektor schickt, der das auftreffende Licht im wesentlichen in sich selbst zum Lichtsender-Empfänger zurückreflektiert, so daß es auf den Strahlteiler fällt und von diesem zu einem Photoempfänger gelenkt wird, der an einer Auswerteelektronik angeschlossen ist, die aus dem elektrischen Ausgangssignal des Photoempfängers eine für den optischen Zustand auf der Meßstrecke repräsentative Anzeige liefert. Mit einem Kondensor wird die Lichtquelle durch den Strahlenteiler in das Objektiv abgebildet. Dieses wiederum bildet die Austrittspupille des Kondensors über die Meßstrecke in die Ebene des Retroreflektors ab.

Bei derartigen Autokollimations-Meßgeräten handelt es sich z.B. um Sichtweiten-oder Rauchdichte-Meßgeräte. Auch können derartige Meßgeräte für die Analyse der spektralen Zusammensetzung des Empfangslichtbündels verwendet werden, um auf diese Weise den Anteil bestimmter Gase auf der Meßstrecke festzustellen. Bei derartigen optischen Autokollimations-Meßgeräten besteht das Problem, einen über längere Zeiten und unabhängig von der Temperatur stabilen Referenzstrahlengang zu schaffen. Bisher wurden für die Erzeugung eines derartigen Referenzstrahlenganges optische und elektrische Bauteile verwendet, die bei der eigentlichen Messung über die Meßstrecke nicht zum Einsatz kommen. Dadurch ist eine unterschiedliche Drift der betreffenden optischen und elektrischen Bauteile je nachdem, ob sie in dem Meß-oder Referenzstrahlengang vorhanden sind, gegeben, die sich speziell bei hochauflösenden Meßgeräten nachteilig bemerkbar macht.

Das Ziel der Erfindung besteht somit darin, ein optisches Autokollimations-Meßgerät der eingangs genannten Gattung zu schaffen, bei dem zumindest die wesentlichen optischen und elektrischen Bauteile sowohl bei der eigentlichen Messung als auch bei der Referenzmessung gleich sind und in gleicher Weise benutzt werden, so daß ein eventuelles Driften bestimmter Bauteile über längere Zeiträume oder bei Temperaturänderungen die Referenzmessung und die eigentliche Messung gleichermaßen beeinflußt und somit keinen Einfluß auf die Meßgenauigkeit hat.

Zur Lösung dieser Aufgabe sieht die Erfindung vor, daß zwischen dem Frontobjektiv und der Meßstrecke ein Umlenkspiegel angeordnet ist, der aus zwei entlang einer senkrecht auf der optischen Achse stehenden geraden Linie aneinandergrenzenden Teilen besteht, die um eine mit der geraden Linie zusammenfallende Schwenkachse derart relativ zueinander verschwenkbar sind, daß durch Verschwenken eines Teils relativ zum anderen Teil das auf den Spiegel auftreffende Licht retroreflektiert wird.

Hierbei soll insbesondere vorgesehen sein, daß der Umlenkspiegel im aufgeklappten Zustand unter 45° zum Einfallslichtbündel angeordnet ist und der vom Frontobjektiv weiter entfernte Teil des Umlenkspiegels in Richtung zum feststehenden anderen Teil um 90° einklappbar ist.

Weiter ist es zweckmäßig, wenn beide Teile des Umlenkspiegels gleich ausgebildet sind.

Der erfindungsgemäße Umlenkspiegel wirkt also bei der normalen Messung als ein ganz normaler durchgehender Planspiegel, weil bei der Messung die beiden Teile des Umlenkspiegels bündig ineinander übergehen und in ein und derselben Ebene liegen. Durch Einklappen der einen Hälfte des Spiegels insbesondere um 90° wird die Meßstrecke abgedeckt, und das auf die nunmehr dachförmige Spiegelanordnung auftreffende Licht wird zum Lichtsender-Empfänger retroreflektiert. Wesentlich ist dabei, daß der Umlenkspiegel ebenso wie bei der Messung über die Meßstrecke von allen Lichtstrahlen zweimal beaufschlagt wird. Ein eventuelles Driften des Umlenkspiegels bezüglich seines Reflexionsgrades in Abhängigkeit von der Zeit und der Temperatur spielen somit bei der Referenzmessung keine Rolle.

Nach einer ersten Ausführungsform kann vorgesehen sein, daß beide Teile des Umlenkspiegels jeweils einen halben Querschnitt des Eintrittslichtbündels bzw. des Reflexionsbündels empfangen. In diesem Fall durchsetzen sich das Sende-und Empfangslichtbündel.

Es ist aber auch möglich, daß ein Teil des Umlenkspiegels das Eingangslicht, der andere Teil symmetrisch das Reflexionsbündel empfängt. In diesem Falle wird die eine Hälfte der Apertur für die Lichtsendung, die andere Hälfte der Apertur für den Lichtempfang ausgenutzt.

Besonders zweckmäßig ist es, wenn der Umlenkspiegel direkt angrenzend nach dem Objektiv vor der Meßstrecke angeordnet ist.

Auf diese Weise gehen lediglich noch eventuelle Änderungen des Retroreflektors über längere Zeiten oder bei Temperaturänderungen in die Messung ein, also nur Veränderungen eines einzigen optischen Bauelementes. Alle übrigen optischen und elektronischen Bauteile werden sowohl bei der echten als auch bei der Referenzmessung gleichermaßen verwendet.

Durch eine Ausführung, bei der der Umlenkspiegel auf einer Vorrichtung montiert ist, durch welche der Spiegel in zwei Achsen im Winkel veränderbar ist, ist ein Auswandern der Achse, das z.B. durch Verschwenken des Meßgerätes eintritt, zu kompensieren. Die Stellgröße wird von einem eingespiegelten Vier-Quadranten-Element abgeleitet. Durch diese Ausführung mit einem Achsen-Nachführungssystem könnten höchstauflösende Meßgeräte entwickelt werden, d.h., daß eventuelle Inhomogenitäten des Strahlenganges nicht eingehen würden; ein Unterleuchten des Retroreflektors wäre möglich.

Eine weitere Ausführungsform soll erreichen, daß etwaige Störungen des Reflexionsvermögens des Umlenkspiegels aufgrund dessen Aufbaus aus zwei aneinander grenzenden Teilen sich auf die Messung nicht nachteilig auswirken können. Hierzu sieht die Erfindung weiter vor, daß die Lichtquelle vorzugsweise im Maßstab 1 : 1 auf eine einen zentralen Quersteg aufweisende Blende abgebildet ist, die ihrerseits derart vorzugsweise in das Frontobjektiv abgebildet ist, daß der Quersteg das sonst im Bereich der Schwenkachse auf den Umlenkspiegel fallende Licht zurückhält.

Der Grundgedanke dieser Weiterbildung ist also darin zu sehen, daß man denjenigen Bereich des klappbaren Umlenkspiegels, in dem durch das Aneinanderstoßen der beiden Kanten die optischen Reflexionseigenschaften gestört sein könnten, für die Reflexion des Meßlichtes nutzt, also den entsprechenden Teil des Meß-Lichtbündels schon im Bereich der Lichtquelle ausspart. Es treffen somit zwei Teillichtbündel zu beiden Seiten der Schwenkachse auf die beiden Teile des klappbaren Umlenkspiegels, welche einwandfreie Reflexionseigenschaften aufweisen.

Besonders vorteilhaft ist es, wenn die Blende eine kreisrunde Mittelöffnung aufweist, quer durch die sich der Quersteg vorzugsweise in der Mitte erstreckt. Hierbei soll insbesondere vorgesehen sein, daß die kreisrunde Mittelöffnung derart in das Frontobjektiv abgebildet ist, daß das Bild des Randes der Mittelöffnung einen deutlichen radialen Abstand vom Rand des Frontobjektivs aufweist.

Auf diese Weise wird nicht der gesamte Querschnitt des Frontobjektivs für die Hindurchleitung des Sendelichtbündels genutzt, sondern nur ein zentraler Teil des Frontobjektivs. Auf diese Weise wird erreicht, daß sich bei gewissen Verlagerungen des Sende-bzw. Empfangslichtbündels keine Veränderung der optischen Abbildungseigenschaften ergibt. Wesentlich ist, daß durch die kreisrunde Mittelöffnung in der Blende auch erreicht wird, daß nicht der gesamte Querschnitt des klappbaren Umlenkspiegels für die Reflexion des Sendelichtbündels genutzt wird. Vielmehr soll an jeder Stelle der beiden Teile des Umlenkspiegels vom Rand des Umlenkspiegels bis zum auftreffenden Sende-Lichtbündel noch ein deutlicher Abstand bestehen.

Die Erfindung wird im folgenden beispielsweise beschrieben; in dieser zeigt:

Fig. 1 eine schematische Darstellung eines erfindungsgemäßen optischen Autokollimations-Meßgerätes und den dazugehörigen Strahlengang bei aufgeklapptem Umlenkspiegel,

Fig. 2 eine Fig. 1 entsprechende Darstellung des gleichen Meßgerätes bei um 90° eingeklapptem Umlenkspiegel die

Fig. 3, 3a eine schematische Darstellung der Achsen-Nachführung in einer Ebene in vergrößertem Maßstab,

Fig. 4 eine schematische Ansicht des Strahlenganges einer weiteren Ausführungsform des erfindungsgemäßen Autokollimations-Meßgerätes in Richtung senkrecht zur Ebene der Fig. 1 und gesehen in Richtung des Reflexionslichtbündels 19 und

Fig. 5 eine Ansicht der Blende gemäß Linie V-V in Fig. 4.

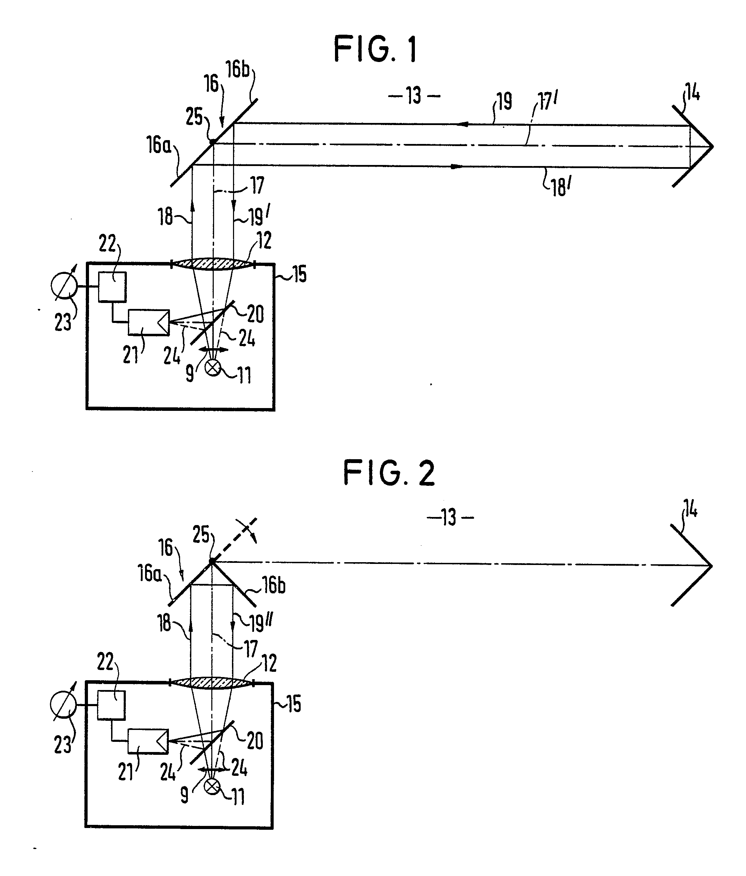

Nach Fig. 1 ist in einem Gehäuse 15 eine Lichtquelle 11 mit Kondensor 9 angeordnet, die über den Kondensor 9 und einen Strahlteiler 20 in ein in der Wand des Gehäuses 15 vorgesehenes Frontobjektiv 12 abgebildet wird. Die Lichtquelle 11 mit dem Kondensor 9 ist relativ zum Frontobjektiv 12 so angeordnet, daß aus dem Frontobjektiv 12 ein nahezu paralleles Einfallslichtbündel 18 austritt, welches je nach der Ausbildung des Strahlteilers 20 entweder nur die halbe oder aber auch die ganze Apertur (gestrichelt dargestellt) des Frontobjektivs 12 einnimmt.

In geringem Abstand vor dem Frontobjektiv 12 ist unter 90° zur optischen Achse 17 des Frontobjektivs 12 ein ebener Umlenkspiegel 16 angeordnet, der das Einfallslichtbündel 18 um 90° zur Meßstrecke 13 umlenkt, an deren Ende ein Retroreflektor 14 angeordnet ist. Bei dem Retroreflektor 14 kann es sich um einen aus zahlreichen Tripeln bestehenden Retroreflektor, ein einzelnes Tripelprisma oder aber auch um ein Beck-Prisma handeln. In letzterem Fall würden die zu einer Seite der optischen Achse 17' verlaufenden Lichtstrahlen durch den Retroreflektor 14 symmetrisch auf die andere Seite der optischen Achse 17' versetzt werden und dort parallel zu den Einfallsstrahlen zum Umlenkspiegel 16 zurückkehren. Aus einem reflektierten Einfallslichtbündel 18' würde so ein parallel dazu verlaufendes Reflexionsbündel 19 werden, welches als reflektiertes Reflexionsbündel 19' - schließlich wieder durch das Frontobjektiv 12 in das Innere des Gehäuses 15 eintritt und dort durch den Strahlenteiler 20 seitlich zu einem Photoempfänger 21 reflektiert wird. Der Photoempfänger 20 ist an eine Auswerteelektronik 22 angeschlossen, welche aus dem Ausgangssignal des Photoempfängers 21 eine für den optischen Zustand auf der Meßstrecke 13 repräsentativer Anzeige 23 liefert.

Erfindungsgemäß ist der ebene Umlenkspiegel 16 in zwei gleiche Hälften 16a, 16b unterteilt, die auf der optischen Achse 17,17' entlang einer senkrecht dazu verlaufenden Linie aneinanderstoßen. Entlang dieser geraden Berührungslinie sind die beiden Teile 16a, 16b des Umlenkspiegels 16 durch eine Schwenkachse 25 miteinander verbunden. Während der Teil 16a des Umlenkspiegels 16 fest angeordnet ist, kann der Teil 16b des Umlenkspiegels 16 aus der Stellung nach Fig. 1 (in Fig. 2 gestrichelt gezeigt) in Richtung des Pfeiles in Fig. 2 in eine um 90° versetzte Stellung nach unten geklappt werden, so daß die beiden Teile 16a, 16b des Umlenkspiegels 16 unter einem Winkel von 90° derart angeordnet sind, daß das Einfallslichtbündel 18 vom Teil 16a unter 90° zum Teil 16b reflektiert und von diesem schließlich als Referenz-Reflexionsbündel 19" zum Frontobjektiv 12 zurückreflektiert wird.

In der in Fig. 1 und 2 bei 24 gestrichelt angedeuteten Weise könnte das Eintritts-und Empfangslichtbündel aber auch beide Hälften der Apertur des Frontobjektivs 12 überdecken, wobei dann der auf der einen Seite der optischen Achse 17 verlaufende Teil des Eintrittslichtbündels 18 parallel auf die andere Seite der optischen Achse 17 versetzt würde und umgekehrt. Während bei der ausgeklappten Position des Teils 16b des Umlenkspiegels 16 nach Fig. 1 der Umlenkspiegel 16 als normaler ebener Planspiegel wirkt, bewirkt er bei der um 90° eingeklappten Position nach Fig. 2, daß der nunmehr dachförmige Umlenkspiegel 16 einen eindimensionalen Retroreflektor darstellt, so daß alles an irgendeiner Stelle unter 45° auf die beiden Teile 16a, 16b auftreffende Licht seitlich parallel versetzt wieder zum Frontobjektiv 12 zurückreflektiert wird, und zwar in der selben Weise, wie das bei dem Retroreflektor 14 am Ende der Meßstrecke 13 der Fall ist, wenn es sich dabei um ein einzelnes Dachkantprisma oder einen einzelnen Tripelspiegel wie ein Beck-Prisma handelt.

Auf diese Weise wird gewährleistet, daß sowohl bei der eigentlichen Messung nach Fig. 1 als auch bei der Referenzmessung nach Fig. 2 sämtliche elektrischen und optischen Bauteile mit Ausnahme des Retroreflektors 14 am Ende der Meßstrecke in gleicher Weise bei der Messung benutzt werden.

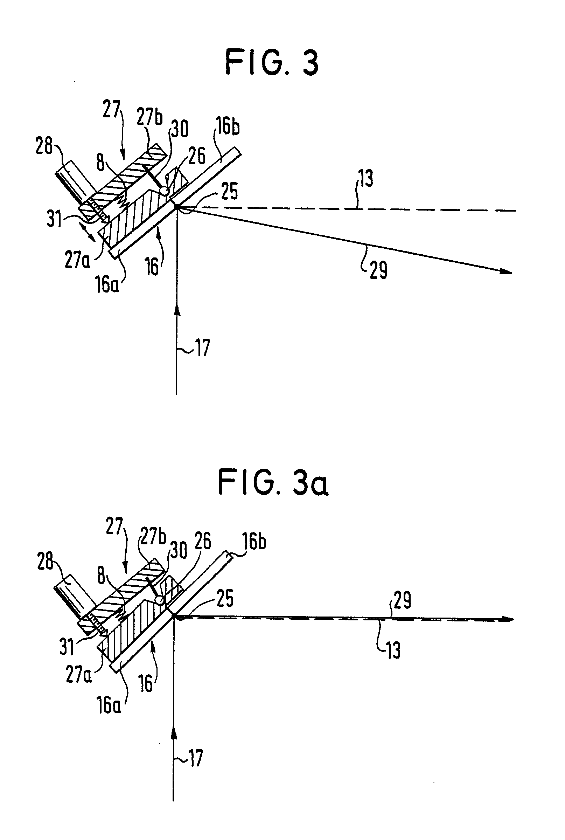

Gemäß Fig. 3 kann der Umlenkspiegel 16 mit seinen Teilen 16a, 16b auf einer Vorrichtung 27 montiert sein, die aus zwei Platten 27a, 27b besteht, von denen die eine (27a) an der Rückseite des Spiegels 16 befestigt ist. Die andere Platte 27b ist in geringem Abstand dahinter angeordnet und in Höhe der Schwenkachse 25 durch einen Lenker 30 mit einem in der Platte 27a in Höhe der Schwenkachse 25 angeordneten Schwenkpunkt 26, z.B. einem Kugelgelenk verbunden.

Im entgegengesetzten Endbereich sind die beiden Platten 27a, 27b durch ein längenveränderliches Stellglied 31 miteinander verbunden, welches durch einen Verstellmechanismus 28, z.B. eine Mikrometerschraube in seiner Länge verändert werden kann.

Die Platte 27b und die Mikrometerschraube 28 sind gehäusefest angeordnet. Auf diese Weise kann durch eine Verstellung der Mikrometerschraube 28 der Abstand der beiden Platten 27a, 27b auf einer Seite verändert werden, während er im Bereich des Kugelgelenks 26 annähernd gleich bleibt. Die Platten 27a,27b sind durch eine Feder 8 aufeinanderzu vorgespannt.

Aufgrund dieser Ausbildung kann z.B. ein durch Verschwenken des Gehäuses von der richtigen Richtung entlang der Meßstrecke 13 abgelenkter Lichtstrahl 29 durch Vergrößerung des Abstandes der beiden Platten 27a, 27b durch Verlängerung des Stellgliedes 31 (Fig. 3a) rückgängig gemacht werden. Mit anderen Worten kann der Lichtstrahl 29 so verschwenkt werden, daß er in der gewünschten Richtung über die Meßstrecke läuft. Auf diese Weise ist eine Kompensation von Fehlausrichtungen des Meß-Lichtstrahls in einem Winkelbereich von ca. 5° ohne weiteres möglich. Durch die Möglichkeit der Achsnachführung ist ein Unterleuchten des Retroreflektors ebenfalls ermöglicht.

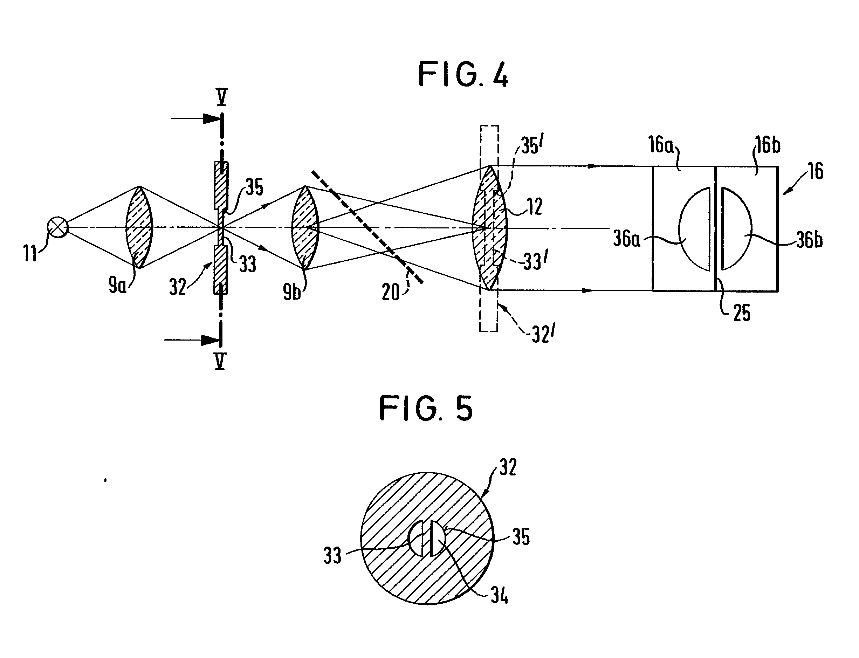

In den Fig. 4 und 5 bezeichnen gleiche Bezugszahlen entsprechende Teile wie in den vorangehenden Ausführungsbeispielen.

Nach Fig. 4 wird die Lichtquelle 11 über eine erste Linse 9a in eine kreisförmige Blende 32 abgebildet, quer durch welche sich ein vertikaler Quersteg 33 erstreckt. Radial nach außen erstreckt sich die Blende 32 so weit, daß sämtliches außerhalb der kreisrunden Mittelöffnung 34 auftreffendes Licht absorbiert wird.

Eine hinter der Blende 32 angeordnete Linse 9b bildet die Blende 32 vergrößert in das Frontobjektiv 12 ab, wo also ein Abbild 32' der Blende 32 vorliegt. Das Bild 33' des Quersteges 33 liegt somit ebenfalls zentral im Frontobjektiv 12.

Der Radius des Randes 35 der kreisförmigen Öffnung 34 ist so gering, daß das Bild 35' des Randes 35 sich in einem deutlichen Abstand radial innen vom Umfang des Frontobjektivs 12 befindet.

Der Quersteg 33 bzw. dessen Bild 33' ist so angeordnet, daß das aus dem Frontobjektiv 12 austretende parallele Lichtbündel in der Mitte einen ausgesparten Bereich aufweist, der auf der Oberfläche des Umlenkspiegels 16 im Bereich der Schwenkachse 25 liegt und sich von der Schwenkachse 25 bzw. von den Stoßkanten der beiden Teile 16a, 16b noch um ein gewisses Stück nach entgegengesetzten Seiten erstreckt. Auf diese Weise wird der die Stoßkanten der Teile 16a, 16b umgebende Bereich des Umlenkspiegels 16 von der Reflexion des Meß-Lichtbündels ausgenommen.

Außerdem ist der Rand 35 der Mittelöffnung 34 so gelegt, daß die beiden Teillichtbündel 36a, 36b nicht nur nicht die Stoßkante der beiden Teile 16a, 16b des Umlenkspiegels 16 berühren, sondern sich auch nicht bis zu einem der Ränder des Umlenkspiegels 16 erstrecken. Hierdurch sind gewisse Toleranzen bei der baulichen Anordnung des Umlenkspiegels 16 möglich.

## Ansprüche

1. Optisches Autokollimations-Meßgerät, insbesondere Trans missions-Meßgerät mit einem in einem Gehäuse angeordneten Lichtsender-Empfänger mit einer Lichtquelle, welche über einen Strahlteiler und eine Optik ein Lichtbündel über eine Meßstrecke zu einem Retroreflektor schickt, der das auftreffende Licht im wesentlichen in sich selbst zum Lichtsender-Empfänger zurückreflektiert, so daß es auf den Strahlteiler fällt und von diesem zu einem Photoempfänger gelenkt wird, der an einer Auswerteelektronik angeschlossen ist, die aus dem elektrischen Ausgangssignal des Photoempfängers eine für den optischen Zustand auf der Meßstrecke repräsentative Anzeige liefert, **dadurch gekennzeichnet,** daß zwischen dem Frontobjektiv (12) und der Meßstrecke (13) ein Umlenkspiegel (16) angeordnet ist, der aus zwei entlang einer senkrecht auf der optischen Achse (17) stehenden geraden Linie aneinandergrenzenden Teilen (16a,16b) besteht, die um eine mit der geraden Linie zusammenfallende Schwenkachse (25) derart relativ zueinander verschwenkbar sind, daß durch Verschwenken eines Teils (16b) relativ zum anderen Teil (16a) das auf den Spiegel auftreffende Licht eindimensional retroreflektiert wird.

2. Meßgerät nach Anspruch 1, **dadurch gekennzeichnet,** daß der Umlenkspiegel (16) im aufgeklappten Zustand unter 45° zum Einfallslichtbündel (18) angeordnet ist und der vom Frontobjektiv (12) weiter entfernte Teil (16b) des Umlenkspiegels (16) in Richtung zum feststehenden anderen Teil (16a) um 90° einklappbar ist.

3. Meßgerät nach Anspruch 1 oder 2, **dadurch gekennzeichnet,** daß beide Teile des Umlenkspiegels (16) gleich ausgebildet sind.

4. Meßgerät nach einem der vorhergehenden Ansprüche, **dadurch gekennzeichnet,** daß beide Teile (16a,16b) des Umlenkspiegels (16) jeweils einen halben Querschnitt des Eintritts lichtbündels (18) bzw. des Reflexionsbündels empfangen.

5. Meßgerät nach einem der Ansprüche 1 bis 3, **dadurch gekennzeichnet,** daß ein Teil (16a) des Umlenkspiegels (16) das Eingangslicht (18), der andere Teil (16b) symmetrisch das Reflexionsbündel (19) empfängt.

6. Meßgerät nach einem der vorhergehenden Ansprüche, **dadurch gekennzeichnet,** daß der Umlenkspiegel außerhalb des Gehäuses (15) direkt angrenzend an die Meßstrecke (13) angeordnet ist.

7. Meßgerät nach einem der vorhergehenden Ansprüche, dadurch gekennzeichnet, daß der Umlenkspiegel (16) auf einer Vorrichtung (27) montiert ist, die es erlaubt, das Auswandern der Achse zum Reflektor, z.B. durch Kippen des Gerätes zu kompensieren.

8. Meßgerät nach einem der vorhergehenden Ansprüche, dadurch **gekennzeichnet,** daß die Lichtquelle (11) vorzugsweise im Maßstab 1 : 1 auf eine einen zentralen Quersteg (33) aufweisende Blende (32) abgebildet ist, die ihrerseits derart vorzugsweise in das Frontobjektiv (12) abgebildet ist, daß der Quersteg (33) das sonst im Bereich der Schwenkachse (25) auf den Umlenkspiegel (16) fallende Licht zurückhält.

9. Meßgerät nach Anspruch 8, dadurch **gekennzeichnet,** daß die Blende (32) eine kreisrunde Mittelöffnung (34) aufweist, quer durch die sich der Quersteg (33) vorzugsweise in der Mitte erstreckt.

10. Meßgerät nach Anspruch 9, dadurch **gekennzeichnet,** daß die kreisrunde Mittelöffnung (34) derart in das Frontobjektiv (12) abgebildet ist, daß das Bild (35') des Randes (35) der Mittelöffnung (34) einen deutlichen radialen Abstand vom Rand des Frontobjektivs (12) aufweist.

# FIG. 1

# FIG. 2

# FIG. 3

# FIG. 3a

# FIG. 4

# FIG. 5

0 254 863